# EUROPÄISCHE PATENTANMELDUNG

(11) **EP 2 347 884 A2**
(43) Veröffentlichungstag der Anmeldung: **27.07.2011**
(21) Anmeldenummer: 10194951.9
(22) Anmeldetag: 14.12.2010
(51) Int. Cl.: B29C 49/24, B29C 49/36, B29C 49/06

(54) **Etikettiervorrichtung und -verfahren zum Etikettieren von Kunststoffflaschen in einer Blasform, insbesondere in einer Rotationsmaschine**

(30) Priorität: 25.01.2010 DE 102010001184
(71) Anmelder: Krones AG, 93073 Neutraubling (DE)
(72) Erfinder: Hausladen, Wolfgang, 93099, Mötzing (DE); Popp, Christian, 93059, Regensburg (DE); Britten, Werner, 93309, Kehlheim (DE)
(74) Vertreter: Grünecker, Kinkeldey, Stockmair & Schwanhäusser Anwaltssozietät

(57) **Zusammenfassung**

Die Erfindung betrifft eine Vorrichtung zum Etikettieren von Kunststoffflaschen in der Blasform sowie ein Verfahren zur Anwendung der erfindungsgemäßen Vorrichtung. Dadurch, dass ein Transferstern und eine Übergabeeinrichtung der Vorrichtung die Vorformlinge und die Etiketten in einem Übergabebereich so aufeinander zu bewegen, dass jeweils ein Etikett nur an einem umfänglichen Teilbereich eines Vorformlings angeheftet wird, kann das Etikett besonders schnell und zuverlässig in die Blasform eingebracht und ein übermäßiges Verstrecken des Etiketts beim Blasen vermieden werden.

## Beschreibung

Die Erfindung betrifft eine Etikettiervorrichtung zum Etikettieren von Kunststoffflaschen in der Blasform nach dem Oberbegriff des Anspruchs 1, sowie ein Etikettierverfahren nach Anspruch 11 zur Anwendung der erfindungsgemäßen Vorrichtung.

Kunststoffflaschen können bekanntermaßen bereits während der Herstellung durch sogenanntes In-Mould-Labelling (IML) etikettiert werden, indem die Etiketten vor dem Blasen in die Blasform eingebracht werden. Hierzu wird das Etikett von Greifern an der Innenwand der geöffneten Blasform positioniert, wie in der US 6.649.119 B2, der US 5.266.149 A und der WO 00 785 26 A1 für Rundläufermaschinen beschrieben. Übergabesterne mit Greifern sind jedoch technisch aufwändig. Nichtrotierende, getaktete Übergabesysteme erreichen nicht die geforderte Produktionsleistung. Außerdem besteht Bedarf für eine Vorrichtung, die sich einfach und mit geringem Platzbedarf in bestehende Blasmaschinen integrieren lässt.

Die US 2002/0166833 A1 bzw. die DE 2135406 A schlagen alternativ vor, hülsenförmige Etiketten auf einen Vorformling bzw. Preform aufzuschieben oder auf diesen aufzuschrumpfen, die DE 198 06 647 A1 ferner, einen blattförmigen Etikettenzuschnitt auf den Vorformling aufzuwickeln und über ein Transferstern an ein Blaskarussell zu übergeben. Bei diesen Verfahren wird das Etikett jedoch gemeinsam mit dem Vorformling erheblich verstreckt und eignet sich für Beschriftungen daher nur bedingt.

Ferner sind aus der EP 0098351 A2 und der US 4,708,630 A Blasmaschinen bekannt, bei denen plane Etiketten am Ausgang eines Extruders durch Andrücken am frisch extrudierten, noch plastisch verformbaren Schlauch des Flaschenrohlings befestigt werden. Diese Verfahren eignen sich jedoch nicht für im Spritzguss vorproduzierte Vorformlinge.

Das Einbringen von Selbstklebeetiketten in die Blasform mit Hilfe eines durch die Blasform bzw. an der Blasform entlang geführten Trägerbandes ist z. B. aus der CH 509864 A und der DE 1479083 A bekannt, wobei die Etiketten durch Ausstanzen oder an einer Ablösekante vom Trägerband getrennt werden können. Diese Lösung schränkt jedoch die Gestaltungsfreiheit beim Formenbau bzw. dem Flaschendesign ein, bereitet Probleme beim Austausch der Trägerbänder, und ist unflexibel und technisch aufwändig, da separate Zuführeinheiten für die einzelnen Blasformen benötigt werden.

Das Etikettieren von Flaschen mit Hilfe von in die Blasformen integrierten Druckköpfen ist beispielsweise in der DE 1479322 A1, der US 2601700 A, oder der US 3438085 A beschrieben. Jedoch eignet sich auch diese Lösung nicht für alle Flaschendesigns. Nachteilig ist ferner, dass pro Blasform mindestens ein Druckkopf benötigt wird, Druckqualitäten und/oder Druckformate eingeschränkt sind, und die Farbstoffe an der Blasmaschine gehandhabt werden müssen.

Aufgabe der Erfindung ist es, eine Vorrichtung und ein Verfahren zum Etikettieren von Kunststoffflaschen in einer Blasform mit hoher Prozesssicherheit und hohem Flaschendurchsatz ohne diese Nachteile bereit zu stellen.

Diese Aufgabe wird dadurch gelöst, dass ein Transferstern und eine Übergabeeinrichtung der Vorrichtung die Vorformlinge und die Etiketten in einem Übergabebereich so aufeinander zu bewegen, dass jeweils ein Etikett an einem umfänglichen Teilbereich eines Vorformlings angeheftet wird.

Dadurch, dass sowohl der Transferstern als auch die Übergabevorrichtung die Vorformlinge und Etiketten auf einander zu bewegen, kann eine komplexe Bewegung bei hohem Flaschendurchsatz ausgeführt werden. Die Bewegung kann besonders schnell und die Übergabe besonders zuverlässig erfolgen, da das Etikett nur an einem umfänglichen Teilbereich des Vorformlings, nicht jedoch an seinem ganzen Umfang, angeheftet wird. Außerdem wird dadurch ein übermäßiges Verstrecken des Etiketts beim Blasen vermieden.

Vorzugsweise umfasst die Vorrichtung ferner eine Beleimungsvorrichtung zum Auftragen von Klebstoff auf einen umfänglichen Teilbereich des Vorformlings und/oder einen Teilbereich des Etiketts. Dadurch lässt sich die Haftwirkung besonders gezielt dosieren, so dass die Etiketten zuverlässig in die Blasformen eingebracht werden und sich beim Blasen korrekt positionieren lassen bzw. in die vorgesehene Position auf der Flasche wandern.

Bei einer besonders vorteilhaften Ausführungsform der Vorrichtung umfasst der Transferstern Greifarme, die den Vorformling in einer Richtung senkrecht zu dessen Hauptachse auf das Etikett zu bewegen, um das Etikett an dem Vorformling anzuheften. Dadurch lässt sich das Etikett besonders kontrolliert am Vorformling anheften.

Vorzugsweise ist die Übergabevorrichtung so eingerichtet, dass sie das Etikett zumindest anteilig in einer Richtung parallel zur Hauptachse des Vorformlings auf diesen zu bewegt, um das Etikett bezüglich des umfänglichen Teilbereichs des Vorformlings vor dem Anheften auszurichten. Dadurch, dass die Übergabevorrichtung eine Bewegungskomponente parallel zur Hauptachse ausführt, können hülsenförmige Etiketten besonders schnell und zuverlässig angeheftet werden.

Bei einer Ausführungsform rotiert die Übergabevorrichtung mit dem Transferstern um eine gemeinsame Achse. Ein zusätzliches Sternrad als Übergabevorrichtung ist dann nicht nötig.

Außerdem kann die Übergabevorrichtung so ausgebildet sein, dass sie das Etikett zumindest anteilig in einer Richtung senkrecht zur Hauptachse des Vorformlings auf diesen zu bewegt, um das Etikett an dem Vorformling anzuheften. In diesem Fall kann der Greifmechanismus des Transfersterns vereinfacht werden.

Vorzugsweise umfasst die Übergabevorrichtung einen an einer Hubeinheit gelagerten Etikettenhalter mit einem Fixierkäfig für hülsenförmige Etiketten. Die Etiketten können dann besonders zuverlässig und reproduzierbar angeheftet werden.

Bei einer Ausführungsform ist die Übergabevorrichtung ein feststehender Spender für hülsenförmige Etiketten und so eingerichtet , dass sie das Etikett auf den Vorformling zu schießt, so dass das Etikett den umfänglichen Teilbereich zumindest teilweise umgibt. Diese Variante ist besonders Platz sparend und einfach in bestehende Maschinen zu integrieren.

Bei einer weiteren Ausführungsform ist die Übergabevorrichtung ein drehbarer Zylinder mit Vakuumgreifern oder mechanischen Greifern. Damit lassen sich auch flächige Etiketten an dem Vorformling anheften.

Vorzugsweise umfasst die Vorrichtung ferner eine Andrückvorrichtung zur Vergrößerung der Haftfläche zwischen dem Etikett und dem Vorformling. Damit kann die Zuverlässigkeit der Haftverbindung erhöht werden.

Das zu Grunde liegende technische Problem wird ferner gelöst durch ein Verfahren zum Etikettieren von Kunststoffflaschen, insbesondere in einer Rotations-Blasmaschine, unter Verwendung der erfindungsgemäßen Vorrichtung und folgende Schritte umfassend: Anheften eines Etiketts an einem umfänglichen Teilbereich eines Vorformlings; Überführen des mit dem Etikett bestückten Vorformlings in eine Blasform; und Blasen des Vorformlings, wodurch das Etikett auf der Flasche aufgebracht wird.

Das Anheften kann besonders schnell und bei hoher Zuverlässigkeit erfolgen, da das Etikett nur an einem umfänglichen Teilbereich des Vorformlings angeheftet wird. Außerdem wird dadurch ein übermäßiges Verstrecken des Etiketts beim Blasen vermieden.

Vorzugsweise wird das Etikett mit Hilfe eines bereichsweise auf dem Vorformling und/oder dem Etikett aufgetragenen Klebers angeheftet. Dadurch lässt sich die Haftwirkung besonders gezielt dosieren, so dass die Etiketten zuverlässig in die Blasformen eingebracht werden und sich beim Blasen korrekt positionieren lassen bzw. in die vorgesehene Position auf der Flasche wandern.

Bei einer weiteren vorteilhaften Ausgestaltung wird das Etikett durch unmittelbar zwischen dem Vorformling und dem Etikett wirkende Adhäsion angeheftet. Ein zusätzlicher Klebstoffauftrag ist dann nicht nötig.

Vorzugsweise schließt der umfängliche Teilbereich des Vorformlings einen Winkel von höchstens 180° ein. Dadurch kann sich das Etikett beim Blasen vorübergehend vom Vorformling lösen, so dass es in der Blasform an die vorgesehene Position wandert.

Bei einer besonders vorteilhaften Ausgestaltung des erfindungsgemäßen Verfahrens ist das Etikett hülsenförmig, und im Schritt a): wird der Vorformling zum Etikett so ausgerichtet, dass die Hauptachse des Vorformlings innerhalb des Etiketts liegt; beim Schritt b): wird das Etikett zumindest anteilig parallel zur Hauptachse des Vorformlings bewegt, so dass es in Richtung der Hauptachse mit dem Teilbereich zum Anheften des Etiketts überlappt; und beim Schritt c): werden der Vorformling und das Etikett senkrecht zur Hauptachse auf einander zu bewegt, so dass das Etikett mit dem Vorformling in Kontakt gebracht wird.

Bevorzugte Ausführungsformen sind in der Zeichnung dargestellt. Es zeigen:
- Fig. 1: eine schematische Draufsicht auf eine erste Ausführungsform der Vorrichtung;
- Fig. 2: eine Hubvorrichtung mit einem Etikettenhalter der ersten Ausführungsform;
- Fig. 3a und 3b: eine schematische Seitenansicht einer Hubvorrichtung mit einem Etikettenhalter einer zweiten Ausführungsform;
- Fig. 4: eine schematische Darstellung des Funktionsprinzips einer dritten Ausführungsform;
- Fig. 5: eine schematische Teilansicht einer vierten Ausführungsform.

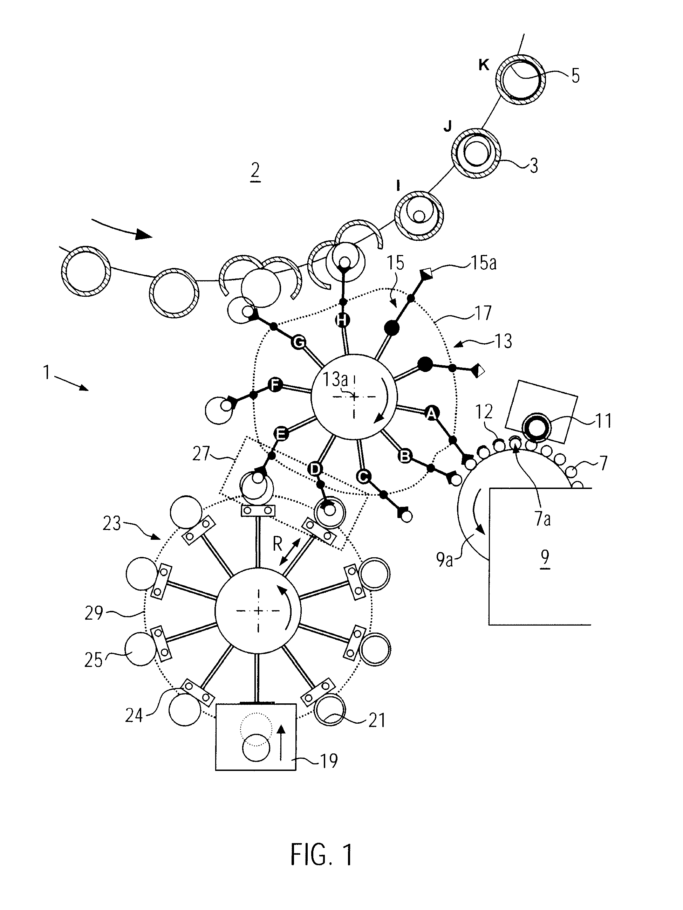

Wie der Fig. 1 zu entnehmen ist, umfasst die erste Ausführungsform der Vorrichtung 1 ein Blasrad 2 mit mehreren Blasformen 3 zum Herstellen von etikettierten Flaschen 5 oder anderen Kunststoffbehältern aus Vorformlingen 7. Letztere werden in einem Ofen 9 in bekannter Weise erhitzt, von einer Leimwalze 11 an einem umfänglichen Teilbereich 7a tangential mit Klebstoff 12 bestrichen und von einem Transferstern 13, wie z. B. einem Teilungsverzugsstern, übernommen. Umfänglich sind an diesem drehbar gelagerte und in der Länge veränderliche Greifarme 15 mit Greifern 15a für die Vorformlinge 7 vorgesehen, sowie eine erste Steuerkurve 17 zum Steuern der Greifarme 15, insbesondere zum Einstellen der radialen Position und Bahngeschwindigkeit der Greifarme 15a.

Weiterhin sind vorgesehen mindestens ein Etikettenspender 19, wie beispielsweise ein Sleeve-Aggregat für Rundum-Etiketten 21 bzw. Etikettenhülsen 21, und eine vorzugsweise sternförmige Übergabevorrichtung 23 mit an Hubeinheiten 24 befestigten Etikettenhaltern 25 zum Anheften der Etiketten 21 and den Vorformlingen 7 in einem Übergabebereich 27. Die vertikale Position der Etikettenhalter 25 wird durch eine zweite Steuerkurve 29 vorgegeben.

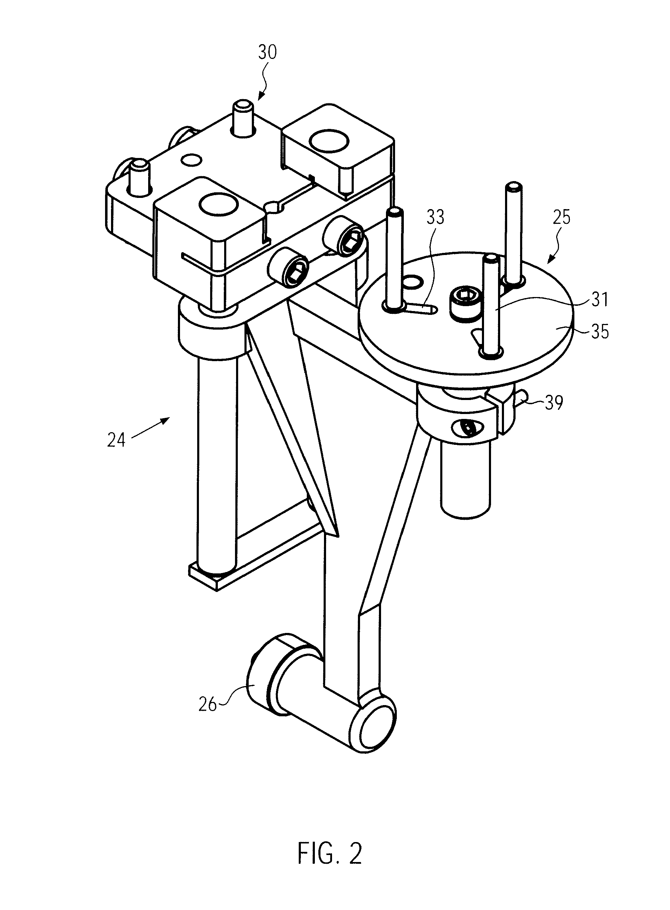

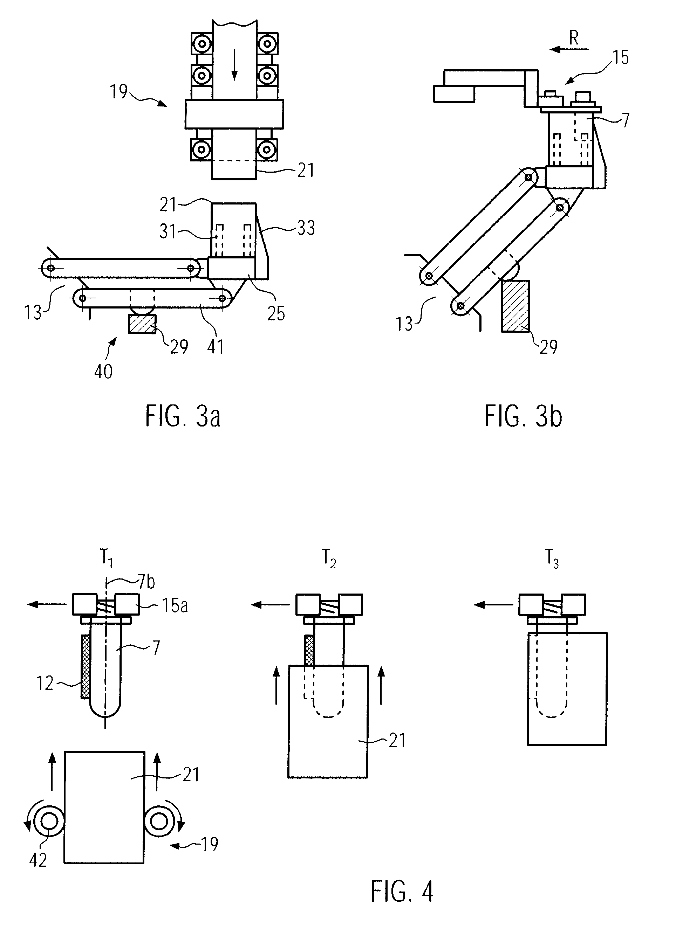

Die Hubeinheiten 24 sind beispielsweise über eine in Fig. 2 angedeutete Klemm- und Führungseinheit 30 an der Übergabevorrichtung 23 befestigt. Der Hub ist linear, d. h. bei im Wesentlichen gleichbleibender radialer Position (in Fig. 4 gekennzeichnet durch den Pfeil R) der Etikettenhalter 25 auf der Übergabevorrichtung 23. Die Steuerkurve 29 senkt den Etikettenhalter 25 mit der Führungsrolle 26 vor bzw. unter dem Etikettenspender 19 ab und hebt ihn unter dem Greifarm 15 an.

Der Etikettenhalter 25 umfasst einen innen liegenden Fixierkäfig 31 zum horizontalen Ausrichten des Etiketts 21, der beispielsweise aus axial auf der Halterung 25 in Länglöchern 33 verstellbaren Stiften besteht; zudem ist die Auflagefläche 35 der Halterung vorzugsweise gegenüber der zweiten Steuerkurve 29 bzw. der Führungsrolle 26 höhenverstellbar, z. B. mittels eines fixierbaren Bolzens 39. Dies ermöglicht eine Anpassung des Etikettenhalters 25 an unterschiedliche Etikettengrößen.

Die Arbeitsweise der Vorrichtung 1 beim Anheften des Etiketts 21 an den Vorformling 7 sowie bei deren gemeinsamer Übergabe an die Blasform 3 ist in Fig. 1 beispielhaft anhand der Positionen A bis H der Greifarme 15 dargestellt:
An der Position A greift der Greifer 15a einen am umfänglichen Teilabschnitt 7a beleimten Vorformling 7 an einem nicht beleimten Abschnitt, z. B. am Mundstück des Vorformlings 7 oberhalb des Klebers 12.
An den Positionen B und C wird der Vorformling 7 zur Übergabevorrichtung 23 geführt, so dass der Vorformling 7, wie an Position D angedeutet, über einem der Steuerkurve 29 folgend abgesenkten Etikett 21 positioniert ist. Dabei könnte zusätzlich die Drehlage des Vorformlings 7 korrigiert werden, um den beleimten Teilbereich 7a des Vorformlings 7 bezüglich des Etiketts 21 bzw. des Greifarms 15 auszurichten. Im gezeigten Beispiel ist dies jedoch nicht nötig, da der beleimte Vorformling 7 bezüglich seiner Drehlage im Greifer 15a bereits korrekt ausgerichtet ist, nämlich so, dass der beleimte Bereich 7a in Richtung des Greifarms 15 bzw. des Transfersterns 13 weist.
An der Position D bzw. im Übergabebereich 27 folgen die Greifer 15a im Wesentlichen der Bahn der Etikettenhalter 25, während sich der Etikettenhalter 25 hebt, bis das Etikett 21 über den Vorformling 7 geschoben ist bzw. der beleimte Bereich 7a vollständig innerhalb des Etiketts 21 positioniert ist. Gleichzeitig und/oder anschließend wird der Greifarm 15 so geschwenkt und/oder zurückgezogen, dass er den beleimten Bereich 7a gegen das Etikett 21 drückt und das Etikett 21 dadurch am Vorformling 7 anheftet. Im gezeigten Beispiel weist der beleimte Bereich 7a in Richtung des Greifarms 15 bzw. des Transfersterns 13, so dass der Vorformling 7 in erster Linie durch Zurückziehen des Greifers 15a gegen das Etikett 21 gedrückt wird. Das Andrücken kann z. B. durch einen in Figur 1 der Übersichtlichkeit halber nicht gezeigten Anschlag an dem Transferstern 13 unterstütz werden, indem das Etikett 21 zwischen dem Anschlag und dem Vorformling 7 vorübergehend eingeklemmt wird.

Der Greifarm 15 könnte je nach Lage der Haftstelle zwischen Vorformling 7 und Etikett 21 jedoch auch in entgegen gesetzter Richtung bewegt werden, also von dem Transferstern 13 weg, oder im Wesentlichen tangential zur Bahn der Etikettenhalter 25, in dem der Greifer 15a dem Etikettenhalter 25 zumindest bereichsweise mit einer höheren oder niedrigeren Bahngeschwindigkeit folgt, bis ein ausreichender Kontakt zwischen dem Vorformling 7 und dem Etikett 21 hergestellt ist.

Der Greifarm 15 führt somit im Übergabebereich 27 vorrangig eine Bewegung in einer Richtung senkrecht zu der in Figur 4 dargestellten Hauptachse 7b des Vorformlings 7 aus, während die Übergabevorrichtung 23 in erster Linie die Aufgabe hat, das Etikett 21 in einer Richtung parallel zur Hauptachse 7b auf den Vorformling 7 zu zu bewegen, um das Etikett 21 vor dem Anheften vertikal auszurichten. Die auszuführenden Bewegungskomponenten könnten zwar beliebig auf die Greifarme 15 und die Übergabevorrichtung 23 aufgeteilt werden. Es ist jedoch zugunsten einer einfachen Steuerung vorteilhaft, dass die erste Steuerkurve 17 die radiale Position und die Bahngeschwindigkeit der Vorformlinge 7 bei konstanter vertikaler Position steuert und die zweite Steuerkurve 29 die vertikale Position der Etiketten 21 bei konstanter Bahngeschwindigkeit bzw. radialer Position.

Nachdem das Etikett 21 an dem Vorformling 7 angeheftet ist, folgt der Greifer 15a der Kreisbahn des Etikettenhalters 25, während sich dieser wieder senkt, zumindest solange, bis der Fixierkäfig 31 vollständig unterhalb des Etiketts 21 positioniert ist. Wie an Position E gezeigt, kann der Greifarm 15 dann aus der Bahn des Etikettenhalters 25 geschwenkt werden.

An den Positionen F bis H werden Vorformling 7 und Etikett 21 gemeinsam einer geöffneten Blasform 3 zugeführt und der Vorformling 7 dort, ggf. nach Streckung, geblasen.

Durch die Positionen I bis K ist ferner das Blasen der Flasche 5 angedeutet, wobei das Etikett 21 während des Blasens über die Reckung an die zu etikettierende Stelle der Flasche 5 wandert. Vorzugsweise wird das Etikett 21 im Durchmesser etwas kleiner als die fertig geblasene Flasche 5 ausgeführt, so dass das Etikett 21 auch an der Stelle mit dem kleinsten Flaschendurchmesser eng anliegt bzw. im Durchmesser geringfügig gedehnt wird. Das Etikett 21 hält somit überwiegend durch die Verstreckung an der fertig geblasenen Flasche 5.

Die Verzögerung des Etikettenhalters 25 bei Abbremsen an der oberen Position der Hubvorrichtung 24 kann je nach Ablaufgeschwindigkeit so hoch sein, dass eine zusätzliche vertikale Fixierung des Etiketts 21 auf dem Etikettenhalter 25 vorteilhaft ist, z. B. um zu verhindern, dass sich das Etikett 21 verformt oder sich von dem Etikettenhalter 25 löst und gegen den Greifarm 15 geschossen wird. Dazu könnte sich beispielsweise ein (nicht gezeigter) klappbarer Deckel eignen, der nur während des Anhebens bzw. Abbremsens einklappt und an dem geeignete Aussparungen für den Vorformling 7 und den Greifarm 15 vorgesehen sind.

Der Klebstoff 12 kann beispielsweise ein temperatursensitiver oder drucksensitiver Klebstoff sein und vor, in oder nach dem Ofen 9 aufgetragen werden. Die Beleimung erfolgt vorzugsweise direkt am Auslaufrad 9a des Ofens 9 mit einer speziellen Leimwalze 11 tangential zur Oberfläche des Vorformlings 7, beispielsweise ähnlich des Klebstoffauftrags der Leimpaletten eines herkömmlichen Kaltleimaggregats, oder berührungslos durch getaktetes Aufsprühen des Klebstoffes. Die Menge des Klebstoffauftrags und die Fläche des beleimten Bereichs 7a hängen vom beabsichtigten Sitz und der Beschaffenheit des verwendeten Etiketts 21 sowie vom Vorformling 7 ab.

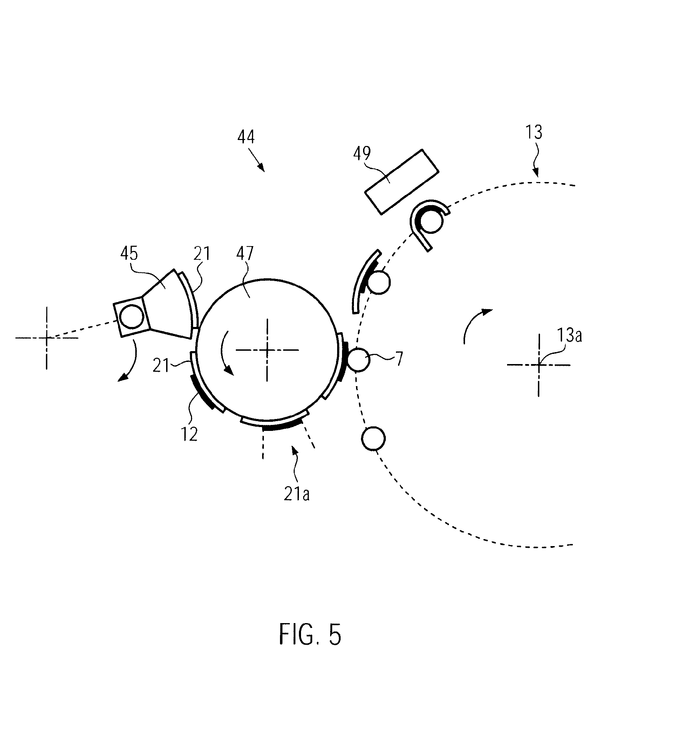

Der beleimte Bereich umfasst vorzugsweise einen umfänglichen Teilbereich 7a des Vorformlings 7 von beispielsweise höchstens 180°, insbesondere höchstens 90°, oder, je nach Anwendung, nur 45°, so dass jeweils nur ein Teilbereich 21a (siehe Fig. 5) des angehefteten Etiketts 21 an dem Vorformling 7 anliegt. Dadurch wird Material gespart und der Sitz des Etiketts 21 auf der fertig geblasenen Flasche 5 optimiert. Je nach Beschaffenheit des Etiketts 21 kann aber auch ein davon abweichender umfänglicher Teilbereich 7a vorteilhaft sein. Alternativ könnte das Etikett 21 auch ohne den Klebstoff 12 an dem Vorformling 7 angeheftet werden, beispielsweise durch unmittelbare Haftung des Etiketts 21 an dem erwärmten Vorformling 7. Dafür geeignete Etikettenmaterialien sind z. B. PET und vorgestrecktes PP.

Im folgenden sind weitere Ausführungsformen der Erfindung beschrieben, wobei auf eine Wiederholung obenstehend beschriebener, gemeinsamer Merkmale verzichtet wird. Ebenso können einzelne Merkmale der Ausführungsformen miteinander kombiniert werden.

Die Figuren 3a und 3b zeigen eine zweite Ausführungsform, bei der die Übergabevorrichtung 40 mit der Hubvorrichtung 41, dem Etikettenhalter 25 und der zweiten Steuerkurve 29 am Transferstern 13 angebracht ist, insbesondere unterhalb der Greifarme 15. Da die Übergabevorrichtung 40 und der Transferstern 13 gekoppelt sind bzw. sich um die gemeinsame Achse 13a drehen, wird der separate Übergabestern der Übergabevorrichtung 23 der ersten Ausführungsform nicht benötigt. Die Hubvorrichtung 41 ist in Form eines Parallelhebels ausgebildet, den Fig. 3a in einer abgesenkten Lage unterhalb des Etikettenspenders 19 und Fig. 3b in einer angehobenen Lage unterhalb des Greifarms 15 beim Andrücken des Etiketts 21 an den Vorformling 7 zeigt. Das Etikett 21 bewegt sich beim Anheben des Etikettenhalters 25 durch die zweite Steuerkurve 29 gleichzeitig radial nach innen (mit dem Pfeil R gekennzeichnet). Dadurch drückt der Etikettenhalter 25 das Etikett 21 mit Hilfe eines Anschlags 33 gegen den in diesem Fall vom Transferstern 13 weg weisenden beleimten Bereich des Vorformlings 7.

Figur 4 zeigt an drei aufeinander folgenden Zeitpunkten T₁ bis T₃ einen Greifer 15a und einen Etikettenspender 19 einer dritten Ausführungsform, bei der die Übergabevorrichtung 42 für die Etiketten 21 feststehend am Etikettenspender 19 angeordnet ist, bzw. in einen Etikettenspender 19, wie z. B. ein Sleeve-Aggregat, integriert ist. Die Übergabevorrichtung 42 umfasst beispielsweise einen Reibradantrieb für die Etiketten 21. Der zusätzliche, in Fig. 1 gezeigte Übergabestern der Übergabevorrichtung 23 wird auch in diesem Fall nicht benötigt. Stattdessen ist die Übergabevorrichtung 42 unterhalb der Bahn der von den Greifern 15a gehaltenen, beleimten Vorformlinge 7 angeordnet. Die Übergabevorrichtung 42 ist so ausgebildet, dass sie das Etikett 21 zu einem Zeitpunkt T₁ nach oben schießt, wenn sich der Vorformling 7 über der Etikettenhülse 21 befindet. Der Zeitpunkt T₁ und die Geschwindigkeit des Etiketts 21 sind dabei so mit der Bewegung (siehe waagrechte Pfeile) des Vorformlings 7 koordiniert, dass sich die Etikettenhülse 21 über den Vorformling 7 schiebt (siehe T₂) und den mit dem Kleber 12 beleimten Bereich des Etiketts zum Zeitpunkt T₃ umschließt. Durch die Relativbewegung zwischen dem Greifer 15a und dem Etikettenspender 19 sowie durch die Massenträgheit des Etiketts 21 wird dieses gegen den Kleber 12 gedrückt und auf diese Weise an dem Vorformling 7 angeheftet. Bei Bedarf kann die Festigkeit bzw. die Fläche der Klebeverbindung durch anschließendes Anblasen oder Anbürsten (nicht gezeigt) noch erhöht werden.

Diese Ausführungsform erfordert besonders wenig Platz. Die erforderlichen Komponenten lassen sich zudem einfach nachrüsten.

Figur 5 zeigt eine vierte Ausführungsform, bei der mit der Übergabevorrichtung 44 an Stelle der Etikettenhülsen flächige Etiketten 21 am Vorformling 7 angeheftet werden. Im Gegensatz zu den vorigen Ausführungsformen wird hier vorzugsweise das Etikett 21 bereichsweise mit dem Kleber 12 beleimt. Dieses wird von einer Palette 45 eines herkömmlichen Leimpalettenkarussells aus einem (nicht gezeigten) Magazin entnommen und an eine Wende- und Übergabevorrichtung 47, wie z. B. einen herkömmlichen Zylinder mit Vakuumgreifern oder mechanischen Greifern, übergeben. Die Wende- und Übergabevorrichtung 47 führt die Etiketten 21 tangential am Transferstern 13 entlang, die Greifarme 15 (nicht gezeigt) drücken jeweils einen Vorformling 7 gegen einen beleimten Bereich 21 a des Etiketts 21 und heften auf diese Weise die Etiketten 21 an den Vorformlingen 7 an. Die Festigkeit der Haftverbindung bzw. die Fläche der Haftverbindung wird bei Bedarf noch mit einer Andrückvorrichtung 49 erhöht, z. B. durch Anblasen mit Luft oder Anbürsten.

Alternativ könnten auch auf einem aufgewickelten Trägerband (nicht gezeigt) gespeicherte Selbstklebeetiketten 21 verwendet werden. Diese sind vorzugsweise nur in einem Teilbereich 21 a klebend. An Stelle des Leimplattenkarussells und der Wendevorrichtung 47 werden die Etiketten 21 mit dem Trägerband in bekannter Weise über eine Ablösekante gezogen, so vom Trägerband getrennt und mit dem klebenden Teilbereich 21 jeweils gegen einen Vorformling 7 gedrückt und dabei an diesem angeheftet. Zur besseren Fixierung kann auch das Selbstklebeetikett 21 anschließend durch Anblasen oder Bürsten auf einer größeren Fläche angedrückt werden.

Dadurch lassen sich auch flächige Etiketten 21 gemeinsam mit dem Vorformling 7 in die Blasform 3 einbringen.

## Patentansprüche

1. Etikettiervorrichtung zum Etikettieren von Kunststoffflaschen (5) in der Blasform (3), insbesondere in einer Rotations-Blasmaschine, mit:
- mehreren Blasformen (3);
- einem Transferstern (13) zum Einbringen von Vorformlingen (7) in die Blasformen (3); und
- mindestens einer Übergabevorrichtung (23, 40, 42, 44) zum Übergeben von Etiketten (21) an die Vorformlinge (7),
**dadurch gekennzeichnet, dass**
der Transferstern (13) und die Übergabeeinrichtung (23, 40, 42, 45) die Vorformlinge (7) und die Etiketten (21) in einem Übergabebereich (27) so aufeinander zu bewegen, dass jeweils ein Etikett (21) an einem umfänglichen Teilbereich (7a) eines Vorformlings (7) angeheftet wird.

2. Vorrichtung nach Anspruch 1, ferner **gekennzeichnet durch** eine Beleimungsvorrichtung (11, 45) zum Auftragen von Klebstoff (12) auf einen umfänglichen Teilbereich (7a) des Vorformlings (7) und/oder einen Teilbereich (21 a) des Etiketts (21).

3. Vorrichtung nach Anspruch 1 oder 2, **dadurch gekennzeichnet, dass** der Transferstern (13) Greifarme (15) umfasst, die den Vorformling (7) in einer Richtung senkrecht zu dessen Hauptachse (7b) auf das Etikett (21) zu bewegen, um das Etikett (21) an dem Vorformling (7) anzuheften.

4. Vorrichtung nach mindestens einem der vorigen Ansprüche, **dadurch gekennzeichnet, dass** die Übergabevorrichtung (23, 40, 42) so eingerichtet ist, dass sie das Etikett (21) zumindest anteilig in einer Richtung parallel zur Hauptachse (7b) des Vorformlings (7) auf diesen zu bewegt, um das Etikett (21) bezüglich des umfänglichen Teilbereichs (7a) des Vorformlings (7) vor dem Anheften auszurichten.

5. Vorrichtung nach mindestens einem der vorigen Ansprüche, **dadurch gekennzeichnet, dass** die Übergabevorrichtung (40) mit dem Transferstern (13) um eine gemeinsame Achse (13a) rotiert.

6. Vorrichtung nach mindestens einem der vorigen Ansprüche, **dadurch gekennzeichnet, dass** die Übergabevorrichtung (40) das Etikett (21) zumindest anteilig in einer Richtung senkrecht zur Hauptachse (7b) des Vorformlings (7) auf diesen zu bewegt, um das Etikett (21) an dem Vorformling (7) anzuheften.

7. Vorrichtung nach mindestens einem der vorigen Ansprüche, **dadurch gekennzeichnet, dass** die Übergabevorrichtung (23, 40) einen an einer Hubeinheit (24, 41) gelagerten Etikettenhalter (25) mit einem Fixierkäfig (31) für hülsenförmige Etiketten (21) umfasst.

8. Vorrichtung nach mindestens einem der Ansprüche 1 bis 4, **dadurch gekennzeichnet, dass** die Übergabevorrichtung (42) ein feststehender Spender für hülsenförmige Etiketten (21) und so eingerichtet ist, dass sie das Etikett (21) auf den Vorformling (7) zu schießt, so dass das Etikett (21) den umfänglichen Teilbereich (7a) umgibt.

9. Vorrichtung nach mindestens einem der Ansprüche 1 bis 4, **dadurch gekennzeichnet, dass** die Übergabevorrichtung (47) ein drehbarer Zylinder mit Vakuumgreifern oder mechanischen Greifern ist.

10. Vorrichtung nach mind. einem der vorigen Ansprüche, ferner **gekennzeichnet durch** eine Andrückvorrichtung (49) zum Vergrößern der Haftfläche zwischen dem Etikett (21) und dem Vorformling (7).

11. Etikettierverfahren zum Etikettieren von Kunststoffflaschen (5), insbesondere in einer Rotations-Blasmaschine, unter Verwendung der Vorrichtung nach einem der vorigen Ansprüche und folgende Schritte umfassend:
a) Anheften eines Etiketts (21) an einem umfänglichen Teilbereich (7a) eines Vorformlings (7);
b) Überführen des mit dem Etikett (21) bestückten Vorformlings (7) in eine Blasform (3); und
c) Blasen des Vorformlings (7), wodurch das Etikett (21) auf der Flasche (5) aufgebracht wird.

12. Verfahren nach Anspruch 11, **dadurch gekennzeichnet, dass** das Etikett (21) mit Hilfe eines bereichsweise auf dem Vorformling (7) und/oder dem Etikett (21) aufgetragenen Klebers (12) angeheftet wird.

13. Verfahren nach Anspruch 10, **dadurch gekennzeichnet, dass** das Etikett (21) durch unmittelbar zwischen dem Vorformling (7) und dem Etikett (21) wirkende Adhäsion angeheftet wird.

14. Verfahren nach mindestens einem der vorigen Ansprüche 10 bis 13, **dadurch gekennzeichnet, dass** der umfängliche Teilbereich (7a) des Vorformlings (7) einen Winkel von höchstens 180° einschließt.

15. Verfahren nach mindestens einem der vorigen Ansprüche 10 bis 14, **dadurch gekennzeichnet, dass** das Etikett (21) hülsenförmig ist und im Schritt a): der Vorformling (7) zum Etikett (21) so ausgerichtet wird, dass die Hauptachse (7b) des Vorformling (7) innerhalb des Etiketts (21) liegt; im Schritt b): das Etikett (21) zumindest anteilig parallel zur Hauptachse (7b) des Vorformlings (7) bewegt wird, so dass es in Richtung der Hauptachse (7b) mit dem umfänglichen Teilbereich (7a) zum Anheften des Etiketts (21) überlappt; und im Schritt c): der Vorformling (7) und das Etikett (21) senkrecht zur Hauptachse (7b) auf einander zu bewegt werden, so dass das Etikett (21) mit dem Vorformling (7) in Kontakt gebracht wird.
